# EUROPÄISCHE PATENTSCHRIFT

(11) **EP 4 112 509 B1**
(45) Veröffentlichungstag und Bekanntmachung des Hinweises auf die Patenterteilung: **12.03.2025**
(21) Anmeldenummer: 21182262.2
(22) Anmeldetag: 29.06.2021
(51) Int. Cl.: B65G 43/08, B65G 47/64, B65G 47/256

(54) **BANDFÖRDERER FÜR PORTIONIERTE LEBENSMITTELPRODUKTE**
BELT CONVEYOR FOR PORTIONED FOOD PRODUCTS
BANDE TRANSPORTEUSE POUR PRODUITS ALIMENTAIRES DÉCOUPÉS EN PORTIONS

(43) Veröffentlichungstag der Anmeldung: 04.01.2023
(73) Patentinhaber: Albert Handtmann Maschinenfabrik GmbH & Co. KG, 88400 Biberach (DE)
(72) Erfinder: Müller, Stefan, 88367 Hohentengen (DE); Willburger, Peter, 88255 Baindt (DE); Bannert, Georg, 88448 Attenweiler (DE)
(74) Vertreter: Grünecker Patent- und Rechtsanwälte PartG mbB

(56) Entgegenhaltungen:
- EP-A1- 1 719 706
- WO-A1-2005/021410
- JP-A- 2003 310 230
- JP-A- H08 268 542

## Beschreibung

Die Erfindung betrifft einen Bandförderer für portionierte Lebensmittelprodukte.

Portionierte Lebensmittelprodukte, wie beispielsweise frisches Hackfleisch, Burger, Patties oder dergleichen, werden bekanntermaßen in Produktionslinien hergestellt, in denen die einzelnen Portionen auf Bandförderern einer Verpackungseinrichtung zugeführt werden. Bekanntermaßen müssen beispielsweise die Gewichte der verpackten Portionen der Fertigpackungsverordnung entsprechen. Hierfür sind Prüfungen zur Qualitätssicherung in der laufenden Produktion durchzuführen. Auch müssen die verpackten Lebensmittelprodukte für den Verzehr unbedenklich sein, wofür beispielsweise keine Fremdkörper enthalten sein dürfen. Entsprechend werden die einzelnen Portionen im Bereich der Produktionslinien anforderungsgemäß sensorisch überwacht, um anschließend fehlerhafte Portionen aus dem laufenden Produktionsprozess auszuschleusen. Hierzu kann beispielsweise das Gewicht, die Form, die Farbe und/oder das Vorhandensein von Fremdkörpern überwacht werden. Dies erfolgt in der Regel in sogenannten Durchlauf-Inspektionseinheiten, wie beispielsweise auf Durchlauf-Waagen, in denen die einzelnen Portionen im Durchlauf, also ohne den Transport der Lebensmittelprodukte anzuhalten, inspiziert werden. Als fehlerhaft erkannte Lebensmittelprodukte sind aus dem Produktstrom auszuschleusen, wobei eine festgestellte Fehlerhaftigkeit beispielsweise ein Mindergewicht, eine unzulässige Form und/oder Farbe und/oder das Vorhandensein unzulässiger Fremdkörper im Lebensmittelprodukt sein kann. Die Durchlaufinspektion kann entsprechend durch Wiegen, bildgebende Überprüfung, Abscannen der Lebensmittelprodukte, Durchleuchten und/oder Metalldetektion erfolgen. Derartigen Durchlauf-Inspektionen ist dann eine Ausleitvorrichtung nachgeschaltet, in der beispielsweise zu leichte oder zu schwere Portionen aus dem Produktstrom ausgeleitet und somit nicht verpackt werden.

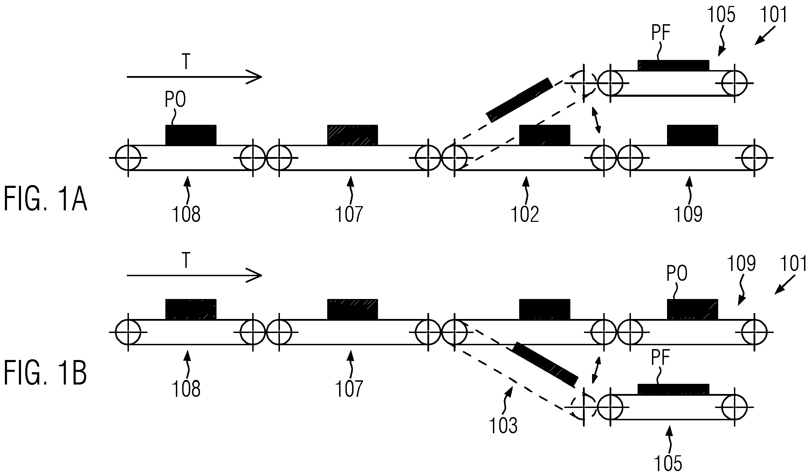

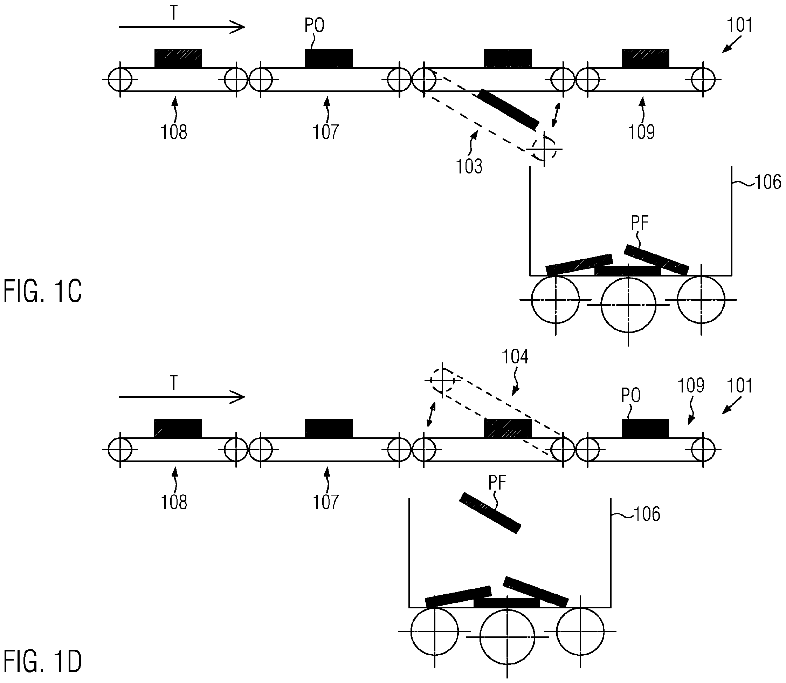

Eine solche aus internem Stand der Technik als gattungsgemäß bekannte Ausleitvorrichtung 101 umfasst gemäß Fig. 1A bis 1D wenigstens einen Bandförderer 102, 103, 104, der bezüglich der Transportrichtung T nach unten oder oben geschwenkt werden kann, um einzelne fehlerhafte Portionen PF aus dem Produktstrom mit ordnungsgemäßen Portionen PO auszuleiten. Die fehlerhaften Portionen PF können auf diese Weise einem Ausleitband 105 und/oder einem Auffangbehälter 106 zugeführt werden. Zum besseren Verständnis sind in den Fig. 1A bis 1D ferner eine dem jeweiligen Bandförderer 102, 103, 104 vorgeschaltete Durchlauf-Inspektionsvorrichtung 107, ein dieser wiederum vorgeschaltetes Zuführband 108 und ein dem Bandförderer 102, 103, 104 Ausleiten möglich ist, das ausgangsseitige Ende des Bandförderers 102, 103 nach oben oder unten zu schwenken oder das eingangsseitige Ende des Bandförderers 104 nach oben zu schwenken.

Die JP 2003 310230 A offenbart einen Bandförderer umfassend: ein Transportband mit einer eingangsseitigen Umlenkrolle, einer demgegenüber und bezüglich horizontaler Transportrichtung nach unten verstellbaren ausgangsseitigen Umlenkrolle und einem sich dazwischen erstreckenden Obertrum zum Transport von Lebensmittelprodukten; und zwischen den Umlenkrollen ortsfest angeordnete Umlenkelemente, an denen das Obertrum und das Untertrum des Transportbands bei nach unten verstellter ausgangseitiger Umlenkrolle von einem in Transportrichtung verlaufenden ersten Längsabschnitt in einen demgegenüber schräg nach unten angestellten zweiten Längsabschnitt übergeht. Einzelne Lebensmittelprodukte können so wahlweise in eine obere oder untere Transportebene mit anschließenden Bandförderern geleitet werden.

Die WO 2005/021410 A1 offenbart zwei übereinander angeordnete Bandförderer, bei denen das jeweilige Obertrum zwischen einer ortsfesten Antriebsrolle und einer demgegenüber nach oben oder unten beweglichen Umlenkrolle verläuft. Das zugehörige Untertrum wird schlaufenartig um ein Rollenpaar geführt, wovon die jeweils obere Rolle gemeinsam mit der zugehörigen Umlenkrolle in der jeweiligen Transportrichtung des Obertrums verstellt werden kann. Dadurch vergrößert sich bei Neigung des Obertrums insgesamt auch dessen Länge, um dadurch einen Lückenschluss zu einem vertikal versetzt anschließenden Bandförderer herzustellen.

Die der Erfindung zugrundeliegende Aufgabenstellung ergibt sich daraus, dass portionierte Lebensmittelprodukte, nachfolgend der Einfachheit halber auch Portionen genannt, einzeln in der Durchlauf-Inspektionsvorrichtung beispielsweise durch Wiegen inspiziert und bei Fehlerhaftigkeit einzeln ausgeleitet werden müssen, ohne den Transport unmittelbar vorauseilender oder nachfolgender Portionen unerwünscht zu beeinträchtigen. Einerseits sollte der Bandförderer zu Gunsten einer möglichst hohen Produktionsleistung möglichst frühzeitig ausgelenkt werden, um eine fehlerhafte Portion PF auszuschleusen. Andererseits ist dies erst dann möglich, wenn eine vorauseilende ordnungsgemäße Portion PO den jeweiligen Bandförderer im Wesentlichen verlassen hat. Zudem darf dieser aus seiner schräg angestellten Ausleitposition erst wieder in seine in Transportrichtung T verlaufende Transportposition zurückbewegt werden, wenn ihn die fehlerhafte Portion PF verlassen hat, wobei eine nachfolgende ordnungsgemäße Portion PO noch nicht zu weit in den Bereich des noch angestellten Bandförderers vorgerückt sein darf.

Somit sind sowohl bei der Durchlauf-Inspektion als auch beim Ausleiten fehlerhafter Portionen PF von Lebensmittelprodukten Mindestabstände zwischen den einzelnen Portionen einzuhalten.

Nachteilig ist dabei, dass die Produktionsleistung, also die pro Zeiteinheit hergestellte Anzahl der Lebensmittelprodukte zu Gunsten eines zuverlässigen Ausleitens fehlerhafter Portionen PF und eines produktschonenden und zuverlässigen Transports ordnungsgemäßer Portionen PO beim Stand der Technik in unerwünschter Weise eingeschränkt ist. Zudem sind die herkömmlichen Ausleitvorrichtungen für das jeweils hinsichtlich seiner Handhabung kritischste Lebensmittelprodukt auszulegen, also in der Regel für die größte herzustellende Portion PO. Aufgrund dieser Einschränkung kann eine bei diesbezüglich weniger kritischen Lebensmittelprodukten eigentlich mögliche höhere Produktionsleistung nicht erzielt werden.

Es besteht somit Bedarf für Bandförderer für Ausleitvorrichtungen oder dergleichen Verteilvorrichtungen, die eine zuverlässige Funktion bei höherer Produktionsleistung und/oder eine flexible Anpassung an unterschiedliche Lebensmittelprodukte und Portionsgrößen ermöglichen.

Die gestellte Aufgabe wird mit einem Bandförderer gemäß Anspruch 1 gelöst. Bevorzugte Ausführungsformen sind in den Unteransprüchen angegeben.

Der Bandförderer dient zum Transport von Portionen von Lebensmittelprodukten, insbesondere Fleischwaren und/oder Teigwaren. Der Bandförderer umfasst ein Transportband, eine zugeordnete Antriebsrolle und eine demgegenüber nach oben und/oder unten verstellbare Umlenkrolle, wobei sich das Obertrum des Transportbands von der Antriebsrolle bis zur Umlenkrolle erstreckt und zum Transport der Portionen angeordnet ist.

Ferner umfasst der Bandförderer ein zwischen der Antriebsrolle und der Umlenkrolle angeordnetes und erfindungsgemäß in Transportrichtung verstellbares Umlenkelement, an dem das Obertrum und/oder das zugehörige Untertrum des Transportbands bei nach oben / unten verstellter Umlenkrolle von einem in Transportrichtung verlaufenden ersten Längsabschnitt in einen demgegenüber schräg nach oben / unten angestellten zweiten Längsabschnitt übergeht.

Somit verläuft das Obertrum und/oder Untertrum im ersten Längsabschnitt permanent in der Transportrichtung und kann aus dieser im zweiten Längsabschnitt in eine davon abweichende Verteilrichtung und insbesondere Ausleitrichtung schräggestellt werden.

Die Verteilrichtung kann sowohl einzelne ordnungsgemäße Portionen des Lebensmittelprodukts im Sinne einer Produktweiche wahlweise auf ein in der Verteilstellung anschließendes Abförderband zur Weiterverarbeitung leiten als auch fehlerhafte Portionen auf ein entsprechend anschließendes Ausleitband oder in einen Auffangbehälter ausleiten.

Bei schräg nach oben / unten angestelltem zweiten Längsabschnitt nimmt der Bandförderer eine Verteilstellung oder Ausleitstellung ein, bei nicht schräg nach oben / unten angestelltem zweiten Längsabschnitt nimmt der Bandförderer eine herkömmliche Transportstellung zum Weitertransport ordnungsgemäßer Portionen des Lebensmittelprodukts ein.

Da in der Verteilstellung / Ausleitstellung lediglich der zweite Längsabschnitt schräg nach oben / unten angestellt wird, kann der erste Längsabschnitt währenddessen eine nachfolgende Portion oder eine vorauseilende Portion aufnehmen, je nachdem, ob der erste Längsabschnitt in Transportrichtung gesehen vor oder nach dem zweiten Längsabschnitt angeordnet ist. Dadurch lässt sich der Transportabstand zwischen aufeinanderfolgenden Portionen des Lebensmittelprodukts im Bereich der Verteilvorrichtung verringern und folglich die Produktionsleistung erhöhen. Zudem lässt sich die Längsstellung des Umlenkelements zwischen Antriebsrolle und Umlenkrolle an die Abmessungen des zu verarbeitenden Lebensmittelprodukts anpassen. Folglich können Verteilvorgänge und/oder Ausleitvorgänge für einzelne Lebensmittelprodukte produktspezifisch optimiert und die Produktionsleistung entsprechend maximiert werden.

Vorzugsweise umfasst das Umlenkelement eine erste Zwischenrolle zur Umlenkung / Segmentierung des Obertrums und/oder eine zweite Zwischenrolle zur Umlenkung / Segmentierung des Untertrums. Das heißt, das in der Verteilstellung angestellte Obertrum und/oder Untertrum läuft über die jeweils zugeordnete Zwischenrolle und wird dort umgelenkt.

Somit erstreckt sich der erste Längsabschnitt von der Antriebsrolle bis zum Umlenkelement / zur zugeordneten Zwischenrolle. Der kippbare zweite Längsabschnitt erstreckt sich von dort bis zur Umlenkrolle. Die erste und/oder zweite Zwischenrolle ermöglicht eine reibungsarme und materialschonende Umlenkung und abschnittsweise Schrägstellung des Transportbands.

Alternativ kann das Umlenkelement auch als ein mit geeigneten Umlenkradien abgerundetes Formteil ausgebildet sein, an dem das Transportband am Übergang vom ersten zum zweiten Längsabschnitt umgelenkt wird. Das Formteil kann zu diesem Zweck aus einem Kunststoff mit vergleichsweise guten Gleiteigenschaften bestehen und/oder eine entsprechende Umlenkfläche aufweisen, beispielsweise aus PTFE oder Polyamid.

Das Umlenkelement ist in einer vertikal festgelegten Lage angeordnet, also lediglich horizontal verstellbar.

Richtungsangaben, wie beispielsweise "oben", "unten", "vertikal" und "horizontal", beziehen sich im Sinne der vorliegenden Erfindung stets auf eine horizontale Transportrichtung.

Der Abstand zwischen der Antriebsrolle und Umlenkrolle in Transportrichtung ist vorzugsweise festgelegt, so dass sich durch Verstellen des Umlenkelements die Längen des ersten und zweiten Längsabschnitts gegenläufig verändern und in der Summe konstant sind.

Beispielsweise kann die Länge des kippbaren zweiten Längsabschnitts bei relativ kurzen Transportabständen zwischen den Portionen und/oder bei vergleichsweise hohen Transportgeschwindigkeiten relativ kurz eingestellt werden, um ein Wegschleudern einer nachfolgenden Portion beim Zurückstellen des zweiten Längsabschnitts in seine Transportstellung zu vermeiden. Anders gesagt können die Abstände zwischen einzelnen Portionen des Lebensmittelprodukts minimiert werden, ohne den Transport jeweils vorauseilender oder nachfolgender Portionen durch das Ausleiten oder anderweitige Verteilen einer bestimmten Portion zu stören.

Anders gesagt verweilt eine auszuleitende Portion nur relativ kurz auf dem entsprechend minimierten zweiten Längsabschnitt, so dass dieser zügig wieder in seine Transportstellung zurückgestellt werden kann. Bei minimiertem zweiten Längsabschnitt ist auch die Verweilzeit einer vorauseilenden Portion auf dem zweiten Längsabschnitt vergleichsweise kurz. Auch dies trägt zu einer Steigerung der Produktionsleistung mit dem erfindungsgemäßen Bandförderer bei.

Vorzugsweise sind die erste und zweite Zwischenrolle derart angeordnet, dass sie in Transportrichtung gemeinsam verstellt werden können. Dies ermöglicht einen vergleichsweise einfachen Verstellvorgang, sowohl manuell als auch gegebenenfalls maschinell, und begünstigt, dass sowohl die Länge des Obertrums als auch die Länge des Untertrums beim Verstellen des zweiten Längsabschnitts im Wesentlichen konstant bleibt.

Alternativ können die erste und zweite Zwischenrolle so angeordnet sein, dass sie in Transportrichtung einzeln / getrennt verstellt werden können. Dadurch können Längenänderungen des Obertrums und/oder Untertrums beim Wechsel zwischen der Transportstellung und der Verteilstellung gegebenenfalls verhindert oder zumindest reduziert werden, beispielsweise falls das Transportband nicht elastisch ausgebildet ist oder nur eine relativ geringe Elastizität aufweist.

Vorzugsweise umfasst der Bandförderer ferner einen Stellantrieb zum maschinellen Verstellen des Umlenkelements in Transportrichtung. Eine zugeordnete Steuerung kann den Bandförderer dann automatisch an die jeweiligen Produktionsbedingungen, wie beispielsweise an die Portionsgröße des zu verarbeitenden Lebensmittelprodukts, anpassen, indem das Umlenkelement automatisch in eine geeignete Längsposition bewegt wird. Dies ist prinzipiell auch im laufenden Produktionsbetrieb möglich, beispielsweise um die Längsposition des Umlenkelements an unterschiedliche / variierende Transportabstände zwischen einzelnen Portionen anzupassen.

Vorteilhaft ist zudem, dass beim Schrägstellen des Transportbands nur der zweite Längsabschnitt bewegt werden muss, während der erste Längsabschnitt permanent in stationärer Lage angeordnet ist. Dadurch ist nur eine relativ geringe Masse beim Schrägstellen zu beschleunigen, wodurch vergleichsweise schnelle Stellbewegungen ermöglicht werden.

Prinzipiell wäre aber auch eine manuelle Verstellung des Umlenkelements praktikabel. Es sind dann vergleichsweise einfache Verstellmechanismen möglich.

Vorzugsweise umfasst der Bandförderer einen programmierbaren und positionsgeregelten Stellantrieb zur Lageverstellung der Umlenkrolle, um den zweiten Längsabschnitt schrägzustellen. Hierfür eignet sich beispielsweise ein servogesteuerter Stellantrieb. Damit kann beispielsweise ein Anstellwinkel des zweiten Längsabschnitts von einer zugeordneten Steuerung automatisch an das jeweils zu verarbeitende Lebensmittelprodukt angepasst werden. Beispielsweise kann der Anstellwinkel für vergleichsweise niedrige Lebensmittelprodukte vergleichsweise geringgehalten werden, um möglichst schnelle Stellvorgänge und kurze Ausleitvorgänge zu ermöglichen.

Bei einer weiteren günstigen Ausführungsform umfasst der Bandförderer einen insbesondere verstellbaren mechanischen Anschlag zur Begrenzung eines Anstellwinkels des zweiten Längsabschnitts. Dies ermöglicht eine vergleichsweise einfache und dennoch reproduzierbare Schrägstellung des zweiten Längsabschnitts. Zudem lässt sich ein derartiger mechanischer Anschlag mit einem nicht positionsgeregelten Stellantrieb kombinieren, wie beispielsweise mit einem Pneumatik-Zylinder. Es sind dann vergleichsweise einfache Antriebsmittel für die Umlenkrolle und den zweiten Längsabschnitt einsetzbar.

Vorzugsweise umfasst der Bandförderer einen Schwenkmechanismus zum Verstellen der Umlenkrolle/zum Schrägstellen des zweiten Längsabschnitts. Ein Schwenkmechanismus lässt sich vergleichsweise einfach konstruieren und betätigen. Denkbar wären prinzipiell jedoch auch lineare Hubmechanismen für die Umlenkrolle und/oder eine Führung der Umlenkrolle entlang einer geeignet verlaufenden Kurvenbahn.

Vorzugsweise umfasst der Bandförderer ferner eine programmierbare Antriebssteuerung zum wahlweisen Betrieb der Antriebsrolle mit wenigstens zwei unterschiedlichen Transportgeschwindigkeiten. Damit lässt sich die Geschwindigkeit des Transportbands beispielsweise während eines Ausleitvorgangs vorübergehend gezielt verändern, beispielsweise um bestimmte Ausleitvorgänge produktspezifisch zu optimieren. Ebenso kann die Geschwindigkeit des Transportbands im laufenden Produktionsbetrieb vorübergehend erhöht oder verlangsamt werden, um beispielsweise Abstände zwischen einzelnen Portionen aneinander anzugleichen.

Vorzugsweise ist das Transportband derart elastisch ausgebildet, beispielsweise als Riemen, dass sich seine Länge an eine beim Verstellen des zweiten Längsabschnitts verursachte Längenänderung seines Obertrums oder Untertrums anpasst. Beispielsweise kann sich die Länge eines nicht um das Umlenkelement laufenden Obertrums oder Untertrums beim Schrägstellen vorübergehend verkürzen. Das elastische Transportband könnte dann in seiner Transportstellung derart unter Spannung gehalten werden, dass auch in der Verteilstellung noch ausreichend Bandspannung für einen zuverlässigen Lauf des dann kürzeren Transportbands gegeben ist.

Als Alternative zu einem elastischen Transportband eignet sich insbesondere die Verwendung eines Umlenkelements mit zwei übereinander angeordneten Zwischenrollen, die sowohl das jeweilige Obertrum als auch das jeweilige Untertrum des Transportbands am Übergang vom ersten zum zweiten Längsabschnitt umlenken. Als weitere Alternative ist auch ein Spannmechanismus für das Transportband zur Kompensation der beim Verstellen auftretenden Längenänderung denkbar.

Vorzugsweise ist das Transportband als eine quer zur Transportrichtung starre Gliederkette ausgebildet. Für die Umlenkung des Obertrums/Untertrums am Umlenkelement muss dieses dann nicht über die gesamte Breite des Transportbands verlaufen. In diesem Fall sind beispielsweise lediglich vergleichsweise schmale Zwischenrollen oder Formteile für die beiden seitlichen Randbereiche der Gliederkette erforderlich.

Vorzugsweise kann der zweite Längsabschnitt durch Verstellen der Umlenkrolle nach unten angestellt werden und ist dann stromabwärts des ersten Längsabschnitts angeordnet, oder der zweite Längsabschnitt kann durch Verstellen der Umlenkrolle nach oben angestellt werden und ist dann stromaufwärts des ersten Längsabschnitts angeordnet ist. Dies begünstigt ein zuverlässiges Weiterleiten ordnungsgemäßer Portionen und ein einfaches Ausleiten fehlerhafter Portionen.

Der beschriebene Bandförderer ist vorzugsweise Bestandteil einer Verteilvorrichtung für Portionen von Lebensmittelprodukten, wobei die Verteilvorrichtung dann ferner eine vorgeschaltete Durchlauf-Inspektionsvorrichtung für die Portionen umfasst, insbesondere mit einer Durchlauf-Waage und/oder einer Kamera und/oder einem Scanner zum optischen Abtasten der Portionen. Die Verteilvorrichtung umfasst dann ferner eine Steuereinrichtung zum automatischen Verstellen der Umlenkrolle und/oder des Umlenkelements in Abhängigkeit von einem Inspektionsergebnis der Durchlauf-Inspektionsvorrichtung. Somit können beispielsweise Ausleitvorgänge oder Verteilvorgänge automatisch in Abhängigkeit von Inspektionsergebnissen ausgelöst und/oder optimiert werden.

Der Bandförderer gemäß wenigstens einer der beschriebenen Ausführungsformen ist vorzugsweise Bestandteil einer Verteilvorrichtung für Portionen von Lebensmittelprodukten, wobei die Verteilvorrichtung dann ferner dem kippbaren zweiten Längsabschnitt in seiner Verteilstellung / Ausleitstellung nachgeschaltet ein Ausleitband und/oder einen Auffangbehälter für fehlerhafte Portionen umfasst. Die Verteilvorrichtung kann dann auch als Ausleitvorrichtung bezeichnet werden.

Vorzugsweise ist der Bandförderer gemäß wenigstens einer der beschriebenen Ausführungsformen Bestandteil einer Verteilvorrichtung für Portionen von Lebensmittelprodukten, wobei die Verteilvorrichtung dann ferner ein erstes Abführband umfasst, welches dem kippbaren zweiten Längsabschnitt in seiner nicht schräg angestellten Transportstellung nachgeschaltet ist, und ein zweites Abführband, das dem kippbaren zweiten Längsabschnitt in seiner angestellten Verteilstellung nachgeschaltet ist. Die Verteilvorrichtung kann dann auch als Sortiervorrichtung oder Produktweiche für die Portionen verstanden werden. Prinzipiell ließen sich hierfür auch mehrere Bandförderer in einer Verteilvorrichtung miteinander kombinieren, um Lebensmittelprodukte auf unterschiedliche Abführbänder zu verteilen.

Bevorzugte Ausführungsformen der Erfindung sind zeichnerisch dargestellt. Es zeigen:
- Fig. 1A bis 1D: Verteileinrichtungen mit Bandförderern gemäß dem Stand der Technik;
- Fig. 2A und 2B: Verteileinrichtungen mit einer ersten Ausführungsform des erfindungsgemäßen Bandförderers;
- Fig. 3A und 3B: Verteileinrichtungen mit einer zweiten bevorzugten Ausführungsform des erfindungsgemäßen Bandförderers;
- Fig. 4A und 4B: eine Verteileinrichtung mit einer dritten bzw. vierten Ausführungsform des erfindungsgemäßen Bandförderers; und
- Fig. 5A und 5B: eine Verteileinrichtung mit einer fünften und sechsten Ausführungsform des erfindungsgemäßen Bandförderers.

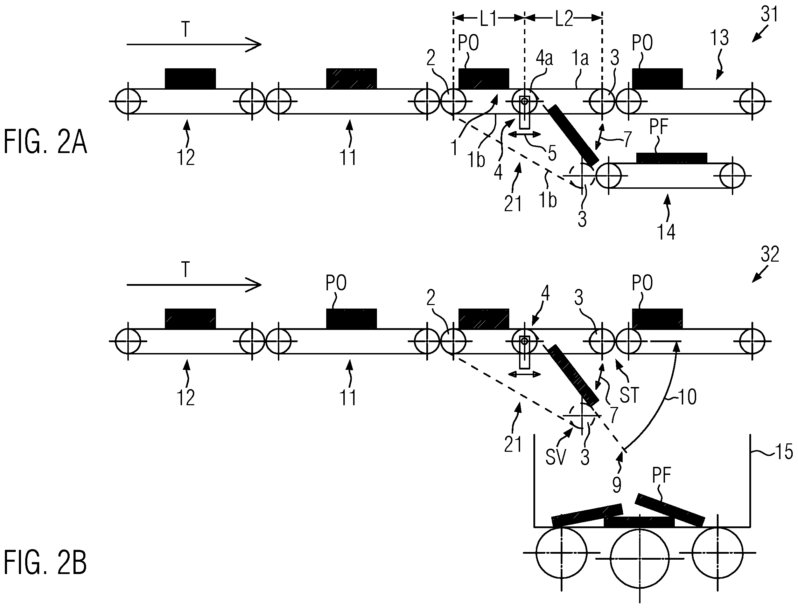

Wie die Fig. 2A erkennen lässt, umfasst der Bandförderer 21 gemäß einer ersten bevorzugten Ausführungsform ein Transportband 1 mit einer Antriebsrolle 2 und einer demgegenüber nach unten verstellbaren Umlenkrolle 3. Das Transportband 1 umfasst ein Obertrum 1a und ein Untertrum 1b, die sich jeweils von der Antriebsrolle 2 bis zur Umlenkrolle 3 erstrecken.

Der Bandförderer 21 umfasst ferner ein zwischen der Antriebsrolle 2 und der Umlenkrolle 3 angeordnetes Umlenkelement 4 zur Unterteilung des Transportbands 1 in einen permanent in Transportrichtung T verlaufenden ersten Längsabschnitt L1 und in einen demgegenüber maschinell in Längsrichtung schräg anstellbaren (kippbaren) zweiten Längsabschnitt L2.

Beim Bandförderer 21 der ersten Ausführungsform wird nur das Obertrum 1a des Transportbands 1 in die Längsabschnitte L1 und L2 unterteilt. Wie nachfolgend noch beschrieben ist, sind je nach Funktionsweise auch Ausführungsformen möglich, bei denen sowohl das Obertrum 1a als auch das Untertrum 1b oder nur das Untertrum 1b entsprechend unterteilt wird.

Dem Umlenkelement 4 zugeordnet ist ein (durch Doppelpfeil angedeuteter) Stellmechanismus 5 zum Verstellen einer Längsposition 6 des Umlenkelements 4 zwischen der Antriebsrolle 2 und der Umlenkrolle 3. Die Verstellung des Umlenkelements 4 erfolgt ausschließlich parallel zur Transportrichtung T, also ausschließlich horizontal.

Beim Bandförderer 21 der ersten Ausführungsform umfasst das Umlenkelement 4 eine erste Zwischenrolle 4a, an der das Obertrum 1a entlangläuft und der permanent in Transportrichtung T ausgerichtete erste Längsabschnitt L1 in den kippbaren zweiten Längsabschnitt L2 übergeht. Der Bandförderer 21 ist in durchgezogenen Linien in einer Transportstellung ST dargestellt, in welcher der zweite Längsabschnitt L2 parallel zur Transportrichtung T ausgerichtet ist, sowie in gestrichelten Linien in einer Verteilstellung SV, in welcher der zweite Längsabschnitt L2 demgegenüber bezüglich der Transportrichtung T schräg nach unten verlaufend angestellt ist, siehe hierzu die zugehörige Bezeichnung in der Fig. 2B.

Zu erkennen ist in der Fig. 2A zudem, dass das Untertrum 1b bei der ersten Ausführungsform nicht vom Umlenkelement 4 unterteilt wird, sondern sowohl in der Transportstellung ST als auch in der Verteilstellung SV geradlinig von der Umlenkrolle 3 zur Antriebsrolle 2 verläuft und daher in der Verteilstellung SV kürzer ist als in der Transportstellung ST. Das Transportband 1 ist dann vorzugsweise elastisch ausgebildet, um diesen Längenunterschied zu kompensieren. Ergänzend oder alternativ ist auch ein Spannmechanismus (nicht dargestellt) für das Transportband 1 zur Kompensation dieses Längenunterschieds denkbar.

In der Fig. 2A ist ferner (durch Doppelpfeil) ein Stellmechanismus 7 für die Umlenkrolle 3 zu deren Verstellung zwischen der Transportstellung ST und der Verteilstellung SV des Bandförderers 21 schematisch angedeutet.

Der Stellmechanismus 7 kann auf unterschiedliche Weise ausgebildet und angetrieben sein. Beispielsweise kann dieser einen Schwenkhebel umfassen, an dem die Umlenkrolle 3 gelagert ist und entlang eines Kreisbogens zwischen der Transportstellung ST und der Verteilstellung SV geführt wird. Stattdessen könnte der Stellmechanismus 7 aber auch eine schienenartige Kurvenführung umfassen, mit der die Umlenkrolle 3 gegebenenfalls auch entlang einer von einer Kreisbahn abweichenden Bewegungsbahn zwischen der Transportstellung ST und der Verteilstellung SV geführt werden könnte. Zudem wäre ein Stellmechanismus 7 mit einer Linearführung für die Umlenkrolle 3 zwischen der Transportstellung ST und der Verteilstellung SV denkbar. Die Konstruktion derartiger Stellmechanismen 7 ist prinzipiell bekannt und daher nicht dargestellt.

Als Stellantrieb (nicht dargestellt) für den Stellmechanismus 7 und die Umlenkrolle 3 eignet sich insbesondere ein positionsgeregelter Motor, wie beispielsweise ein Servomotor. Damit können von einer zugeordneten Steuerung 8 unterschiedliche Verteilstellungen SV vorgegeben werden.

Die Umlenkrolle 3 kann dann mittels des positionsgeregelten Antriebs variabel in eine jeweils an die zu verarbeitende Portionsgröße angepasste Verteilstellung SV bewegt werden.

Alternativ dazu ist es auch denkbar, einen ungeregelten Stellantrieb für den Stellmechanismus 7 und die Umlenkrolle 3 zu verwenden und beispielsweise mit einem mechanischen Anschlag 9 für die Verteilstellung SV zu kombinieren. Dessen Position könnte beispielsweise manuell verstellbar sein, um die Verteilstellung SV passend zur jeweiligen Produktgröße / Portionsgröße festzulegen. In Kombination mit dem Anschlag 9 würde sich beispielsweise ein Pneumatik-Zylinder zum Bewegen der Umlenkrolle 3 zwischen der Transportstellung ST und der Verteilstellung SV eignen.

Mit Stellantrieb und Stellmechanismus 7 kann der zweite Längsabschnitt L2 auf einen definierten Anstellwinkel 10 (siehe Fig. 2B) bezüglich der Transportrichtung T gestellt / gekippt werden. Unterschiedliche Verteilstellungen SV können beispielsweise durch automatisches Anfahren in der Steuerung 8 jeweils zugeordneter Anstellwinkel 10 oder durch entsprechendes Verstellen des Anschlags 9 eingenommen werden.

Der Vollständigkeit halber dargestellt sind in der Fig. 2A folgende prinzipiell bekannte Bestandteile einer den Bandförderer 21 umfassenden ersten Verteilvorrichtung 31: eine stromaufwärts des Bandförderers 21 angeordnete Durchlauf-Inspektionseinheit 11, die beispielsweise eine Durchlauf-Waage umfassen kann; ein dieser vorgeschaltetes Zuführband 12; ein dem Bandförderer 1 in seiner Transportstellung ST nachgeschaltetes Abförderband 13 für ordnungsgemäße Portionen PO von Lebensmittelprodukten; und ein dem Bandförderer 1 in seiner Verteilstellung SV nachgeschaltetes Verteilband 14, dem prinzipiell unterschiedliche Aufgaben zugeordnet sein könnten.

Bei dem Verteilband 14 kann es sich (wie dargestellt) um ein Ausleitband für fehlerhafte Portionen PF eines Lebensmittelprodukts handeln, um ein weiteres Abförderband für ordnungsgemäße Portionen PO desselben Lebensmittelprodukts oder für Portionen eines anderen Lebensmittelprodukts, um beispielsweise nachgeschaltete Verpackungsmaschinen parallel zu beschicken. Die Verteilvorrichtung 21 kann somit entweder zum Ausleiten fehlerhafter Produkte, zum Aufteilen homogener Produktströme oder zum Sortieren heterogener Produktströme eingesetzt werden.

In den Figuren sind vereinfachend sowohl ordnungsgemäße Portionen PO als auch fehlerhafte Portionen PF eines Lebensmittelprodukts beispielhaft dargestellt. Prinzipiell könnten in der Durchlauf-Inspektionseinheit 11 beliebige Kriterien überprüft werden, um zwischen ordnungsgemäßen Portionen PO und/oder fehlerhaften Portionen PF eines einheitlichen Lebensmittelprodukts oder unterschiedlicher Lebensmittelprodukte zu unterscheiden. Hierfür geeignete Überwachungsverfahren sind prinzipiell bekannt und daher nicht im Detail erläutert.

Der Antriebsrolle 2 ist vorzugsweise ein Antriebsmotor (nicht dargestellt) mit von der Steuerung 8 einstellbarer Geschwindigkeit zugeordnet. Beispielsweise lässt sich dann eine an die jeweilige Portionsgröße und/oder an Transportabstände zwischen aufeinanderfolgenden Portionen PO, PF angepasste Transportgeschwindigkeit einstellen. Die Transportgeschwindigkeit lässt sich dann während des laufenden Produktionsprozesses gegebenenfalls auch individuell an unterschiedliche Portionsgrößen und/oder Transportabstände anpassen.

Die voranstehend beschriebenen Funktionen können prinzipiell gleichermaßen bei den nachstehend beschriebenen Ausführungsformen umgesetzt werden.

Die Fig. 2B zeigt die Verteileinrichtung 32 gemäß einer zweiten Ausführungsform, die ausschließlich als Ausleitvorrichtung ausgelegt ist. Zwar ist bei dieser ebenso der Bandförderer 21 gemäß der ersten Ausführungsform vorhanden, das Verteilband 14 jedoch durch einen Auffangbehälter 15 für fehlerhafte Portionen PF ersetzt. Es wäre auch denkbar, die fehlerhaften Portionen PF zuerst auf ein Verteilband 14 zu leiten und anschließend im Auffangbehälter 15 zu sammeln.

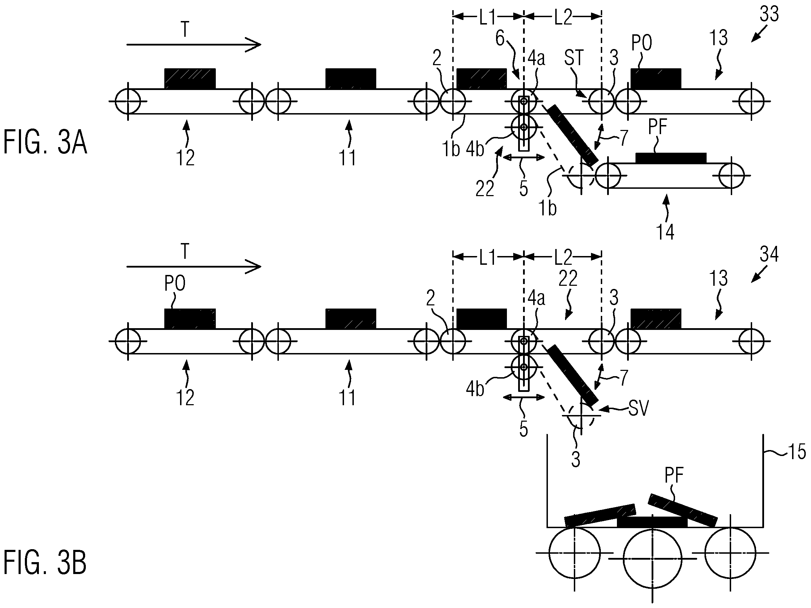

Wie die Fig. 3A erkennen lässt, umfasst das Umlenkelement 4 in einem Bandförderer 22 einer zweiten bevorzugten Ausführungsform eine zweite Zwischenrolle 4b, die vorzugsweise gemeinsam mit der ersten Zwischenrolle 4a in Transportrichtung T zwischen der Antriebsrolle 2 und der Umlenkrolle 3 verstellt werden kann, wie dies voranstehend bereits erläutert wurde.

Der wesentliche Unterschied zum Bandförderer 21 der ersten Ausführungsform liegt darin, dass so zusätzlich das Untertrum 1b des Transportbands 2 in den permanent in Transportrichtung T verlaufenden ersten Längsabschnitt L1 und den demgegenüber schräg anstellbaren zweiten Längsabschnitt L2 unterteilt ist. Dies wird durch die Führung / Umlenkung des Untertrums 1b an der zweiten Zwischenrolle 4b bewirkt.

Während die Umlenkfunktion der ersten Zwischenrolle 4a für das Obertrum 1a des Transportbands 1 durch die zweite Zwischenrolle 4b nicht beeinflusst wird, bewirkt diese für das Untertrum 1b, dass sich dessen Länge zwischen der Antriebsrolle 2 und der Umlenkrolle 3 auch beim Schrägstellen des zweiten Längsabschnitts L2 insgesamt nicht oder zumindest deutlich geringer ändert, als dies ohne zweite Zwischenrolle 4b der Fall ist.

Wie die Fig. 2A und 3A diesbezüglich im Vergleich zeigen, verkürzt sich das Untertrum 1b bei der ersten Ausführungsform beim Anfahren der Verteilstellung SV gegenüber der Transportstellung ST. Dies kann ohne die zweite Zwischenrolle 4b beispielsweise dadurch ausgeglichen werden, dass das Transportband 1 insgesamt so elastisch ist, dass es sich an die Längenänderung des Untertrums 1b zwischen der Transportstellung ST und der Verteilstellung SV anpasst, oder durch einen (nicht dargestellten) Spannmechanismus für das Transportband 1.

Demgegenüber bietet die zweite Zwischenrolle 4b den Vorteil, dass das Transportband 1 keine oder nur in geringem Maße elastische Eigenschaften aufweisen muss, da keine nennenswerte Längenänderung des Untertrums 1b zwischen der Transportstellung ST und der Verteilstellung SV auszugleichen ist.

Bei Vorhandensein der zweiten Zwischenrolle 4b ließe sich beispielsweise für das Transportband 1 eine in Querrichtung starre Gliederkette einsetzen, die nur in ihren beiden seitlichen Randbereichen von den zugeordneten Antriebs- und Umlenkrollen 2, 3 sowie dem Umlenkelement 4 geführt werden muss.

Der Bandförderer 22 gemäß der zweiten Ausführungsform ist beispielsweise Bestandteil einer Verteilvorrichtung 33 gemäß einer dritten Ausführungsform mit ausgangsseitigem Verteilband 14 (in Analogie zur Fig. 2A).

Die Fig. 3B zeigt den Ersatz des ausgangsseitigen Verteilbands 14 durch einen gegebenenfalls auch fahrbaren Auffangbehälter 15 für fehlerhafte Portionen PF in einer Verteilvorrichtung 34 gemäß einer vierten Ausführungsform, die mit Ausnahme des Bandförderers 22 mit zwei Umlenkrollen 2, 3 prinzipiell der Fig. 2B entspricht und ebenso als Ausleitvorrichtung ausgelegt ist.

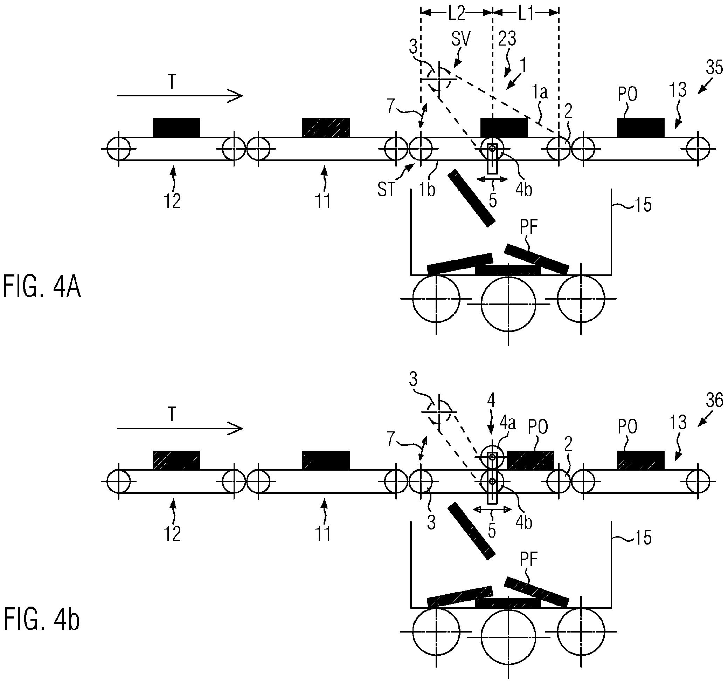

Wie die Fig. 4A und 4B erkennen lassen, kann der Bandförderer 23, 24 gemäß einer dritten und vierten bevorzugten Ausführungsform einen nach oben anstellbaren zweiten Längsabschnitt L2 aufweisen, wofür wenigstens das Untertrum 1b vom Umlenkelement 4 in den permanent in Transportrichtung T verlaufenden ersten Längsabschnitt L1 und den kippbaren zweiten Längsabschnitt L2 unterteilt wird. Die nach oben anstellbaren Bandförderer 23, 24 sind Bestandteile von Verteilvorrichtungen 35, 36 gemäß einer fünften bzw. sechsten Ausführungsform.

Bei den Bandförderern 23, 24 umfasst das Umlenkelement 4 hierzu die zweite Zwischenrolle 4b, an der das Untertrum 1b entlangläuft und der erste Längsabschnitt L1 in den kippbaren zweiten Längsabschnitt L2 übergeht.

Der Bandförderer 24 der vierten Ausführungsform unterscheidet sich vom Bandförderer 23 der dritten Ausführungsform wiederum nur durch eine zusätzliche Zwischenrolle, bei der es sich hier um die dem Obertrum 1a zugeordnete erste Zwischenrolle 4a handelt.

Auch die Bandförderer 23, 24 sind in durchgezogenen Linien in der Transportstellung ST dargestellt, in welcher der kippbare zweite Längsabschnitt L2 parallel zur Transportrichtung T ausgerichtet ist, sowie in gestrichelten Linien in der schräggestellten Verteilstellung SV.

Während das gesamte Obertrum 1a bei den Bandförderern 21, 22 mit nach unten anstellbarem zweiten Längsabschnitt L2 sowohl in der Transportstellung ST als auch in der Verteilstellung SV eine Transportfunktion aufweist, ist dies bei den in den Fig. 4A und 4B dargestellten Bandförderern 23, 24 mit nach oben anstellbarem zweiten Längsabschnitt L2 nur in der Transportstellung ST der Fall. In der Verteilstellung SV sollen auszuleitende fehlerhafte Portionen PF das Obertrum 1a dagegen nicht erreichen und drauf gegebenenfalls vorauseilende ordnungsgemäße Portionen PO von der Schrägstellung möglichst nicht beeinträchtigt und insbesondere nicht weggeschleudert werden.

Die Verteilstellung SV dient hier ausschließlich dem Ausleiten fehlerhafter Portionen PF. Das Untertrum 1b wird im zweiten Längsabschnitt L2 demnach soweit nach oben schräggestellt, dass auszuleitende fehlerhafte Portionen PF des Lebensmittelprodukts die angehobene Umlenkrolle 3 nicht erreichen, sondern unter dieser nach unten fallen, beispielsweise in einen bereitstehenden Auffangbehälter 15.

Das heißt, die Verteilfunktion wird dann im Wesentlichen nur durch abschnittsweise Umlenkung des Untertrums 1b des Transportbands 1 bewirkt, während das Obertrum 1a so geführt ist, dass gegebenenfalls darauf vorauseilende Portionen PO auch in der Verteilstellung SV zuverlässig transportiert werden können oder das Obertrum 1a bereits verlassen haben.

Dies kann durch die zusätzliche Zwischenrolle 4a begünstigt werden, da das Obertrum im ersten Längsabschnitt L1 dann permanent in Transportrichtung T ausgerichtet ist und darauf vorauseilende Portionen PO in der Verteilstellung SV nicht oder nur vergleichsweise kurzzeitig beeinträchtigt werden können.

Die nach oben anstellbaren Bandförderer 23, 24 können als sowohl horizontal als auch vertikal gespiegelte Varianten der nach unten anstellbaren Bandförderer 21, 22 angesehen werden.

Entsprechend ist der nach oben kippbare zweite Längsabschnitt L2, also bei nach oben anstellbarem Transportband 1, vorzugsweise stromaufwärts des permanent in Transportrichtung T ausgerichteten ersten Längsabschnitts L1 angeordnet, bei nach unten anstellbarem Transportband 1 verhält es sich vorzugsweise umgekehrt. Diese Konstellationen sind für einen zuverlässigen Transport der Portionen PO, PF besonders vorteilhaft. Abweichungen davon wären aber prinzipiell möglich, beispielsweise ein in der Verteilstellung SV in Stromrichtung relativ sanft ansteigender zweiter Längsabschnitt L2 zur Verteilung relativ flacher Lebensmittelprodukte.

Sämtliche bezüglich der Fig. 2A bis 3B dargestellten Bestandteile des Bandförderers 21, 22 und der Verteilvorrichtungen 31 bis 34 sowie deren Funktionen können prinzipiell in gleicher Weise bei im obigen Sinne gespiegelter Anordnung vorhanden sein. Daher sind die beschriebenen Stellfunktionen und Steuerfunktionen bei allen offenbarten Ausführungsformen möglich und deshalb nicht nochmals im Einzelfall genannt und/oder in den Figuren bezeichnet.

In den Fig. 4A und 4B ist zu erkennen, dass die Anordnung mit nach oben anstellbarem (kippbarem) zweiten Längsabschnitt L2 in erster Linie für das Ausleiten fehlerhafter Portionen PF eignet, da diese bei Anfahren der Verteilstellung SV (wiederum gestrichelt dargestellt) unmittelbar vor bzw. unter dem Bandförderer 23, 24 herabfallen.

Demgegenüber eignet sich für einen schonenden Transport ordnungsgemäßer Portionen PO und gegebenenfalls deren Verteilung auf unterschiedliche Abförderbänder und/oder Verteilbänder 13, 14 in erster Linie ein nach unten anstellbarer (kippbarer) zweiter Längsabschnitt L2, sodass die zu verteilenden Portionen PO, PF durchwegs auf dem Obertrum 1a des Transportbands 1 aufliegen.

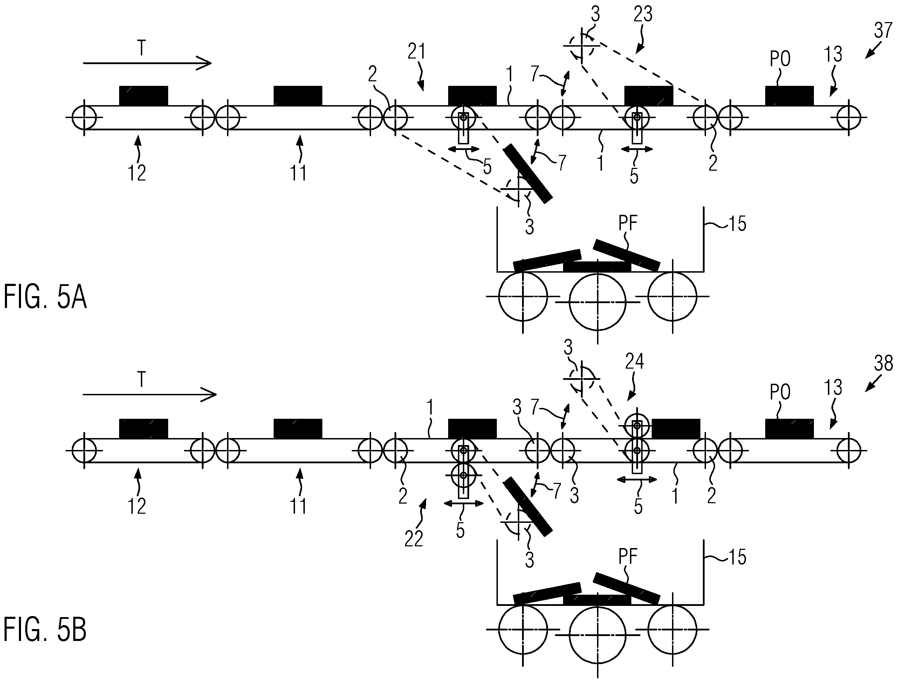

Die Fig. 5A und 5B verdeutlichen, dass Bandförderer 21, 22 mit nach unten anstellbarem zweiten Längsabschnitt L2 und diesbezüglich gespiegelte Bandförderer 23, 24 mit nach oben anstellbarem zweiten Längsabschnitt L2 auch paarweise hintereinanderliegend miteinander kombiniert werden können, beispielsweise in den dargestellten Verteilvorrichtungen 37, 38 gemäß einer siebten und achten Ausführungsform, die wiederum vorrangig als Ausleitvorrichtung ausgelegt sind.

Die beiden jeweils hintereinanderliegenden Bandförderer 21 bis 24 werden dann vorzugsweise getrennt voneinander angesteuert, so dass unterschiedliche Anpassungsmöglichkeiten je nach weiter zu transportierenden oder auszusondernden Portionen PO, PF von Lebensmittelprodukten bestehen. Das heißt, die Umlenkrollen 3 der einzelnen Bandförderer 21 bis 24 können je nach Bedarf gleichzeitig oder auch nacheinander zwischen der Transportstellung ST und der Verteilstellung SV verstellt werden. Damit kann beispielsweise besser auf stark schwankende Transportabstände zwischen einzelnen Portionen PO, PF reagiert werden.

Im Produktionsbetrieb ermöglicht die Durchlauf-Inspektionseinheit 11 prinzipiell sowohl die laufende portionsweise Qualitätsüberwachung bestimmter Lebensmittelprodukte als auch eine Erkennung unterschiedlicher Lebensmittelprodukte, um anschließend am Bandförderer 21 bis 24 entweder ordnungsgemäße Portionen PO der Lebensmittelprodukte auf unterschiedliche Abförder- und Verteilbänder 13, 14 im Sinne einer Sortierung zu verteilen und/oder fehlerhafte Portionen PF der Lebensmittelprodukte auf ein zugeordnetes Verteilband 14 und/oder in einen Auffangbehälter 15 auszuleiten.

Hierbei ergeben sich durch die Längsverstellung des Umlenkelements 4 in Transportrichtung T bzw. entgegen dieser vielfältige Anpassungsmöglichkeiten zur Optimierung der Produktionsleistung bei unterschiedlichen Lebensmittelprodukten. Mit Hilfe der Steuereinheit 8 lassen sich hierbei geeignete Stellbewegungen des Umlenkelements 4 und/oder der Umlenkrolle 3 zum Anfahren der Verteilstellung SV programmieren und gegebenenfalls im Produktionsbetrieb laufend an die jeweiligen Erfordernisse anpassen.

Das Umlenkelement 4 kann anstelle der ersten und/oder zweiten Zwischenrolle 4a, 4b wenigstens eine feststehende (nicht umlaufende) Umlenkfläche / Gleitfläche mit geeigneter Krümmung zur Führung / Umlenkung des Transportbands 1 am Übergang zwischen erstem und zweitem Längsabschnitt L1, L2 aufweisen.

## Patentansprüche

1. Bandförderer (21 - 24) für portionierte Lebensmittelprodukte, insbesondere Fleischwaren und/oder Teigwaren, umfassend:
- ein Transportband (1) mit einer Antriebsrolle (2), mit einer demgegenüber und bezüglich einer als horizontal angenommenen Transportrichtung (T) nach oben und/oder unten verstellbaren Umlenkrolle (3) und mit einem sich dazwischen erstreckenden Obertrum (1a) zum Transport der Lebensmittelprodukte; und
- ein zwischen der Antriebsrolle und der Umlenkrolle in vertikal festgelegter Lage angeordnetes und in der Transportrichtung (T) verstellbares Umlenkelement (4), an dem das Obertrum und/oder das zugehörige Untertrum (1b) des Transportbands bei nach oben / unten verstellter Umlenkrolle von einem in Transportrichtung verlaufenden ersten Längsabschnitt (L1) in einen demgegenüber schräg nach oben / unten angestellten zweiten Längsabschnitt (L2) übergeht.

2. Bandförderer nach Anspruch 1, wobei das Umlenkelement (4) eine erste Zwischenrolle (4a) zur Umlenkung des Obertrums (1a) und/oder eine zweite Zwischenrolle (4b) zur Umlenkung des Untertrums (1b) umfasst.

3. Bandförderer nach Anspruch 2, wobei die erste und zweite Zwischenrolle (4a, 4b) derart angeordnet sind, dass sie in Transportrichtung (T) einzeln oder gemeinsam verstellt werden können.

4. Bandförderer nach Anspruch 1, 2 oder 3, ferner mit einem Stellantrieb zur maschinellen Verstellung des Umlenkelements (4) in Transportrichtung (T).

5. Bandförderer nach wenigstens einem der vorigen Ansprüche, ferner mit einem positionsgeregelten Stellantrieb für die Umlenkrolle (3) zum Anfahren eines programmierbaren Anstellwinkels (10) des zweiten Längsabschnitts (L2).

6. Bandförderer nach wenigstens einem der vorigen Ansprüche, ferner mit einem insbesondere verstellbaren mechanischen Anschlag (9) zur Begrenzung eines Anstellwinkels (10) des zweiten Längsabschnitts.

7. Bandförderer nach wenigstens einem der vorigen Ansprüche, mit einem Schwenkmechanismus zum Verstellen der Umlenkrolle (3).

8. Bandförderer nach wenigstens einem der vorigen Ansprüche, ferner mit einer programmierbaren Steuerung (8) zum wahlweisen Betrieb der Antriebsrolle (2) mit wenigstens zwei unterschiedlichen Transportgeschwindigkeiten.

9. Bandförderer nach wenigstens einem der vorigen Ansprüche, wobei das Transportband (1) derart elastisch ausgebildet ist, insbesondere als Elastomer-Riemen, dass sich seine Länge an eine beim Verstellen des zweiten Längsabschnitts (L2) verursachte Längenänderung seines Obertrums (1a) oder Untertrums (1b) anpasst.

10. Bandförderer nach wenigstens einem der vorigen Ansprüche, wobei das Transportband (1) als eine quer zur Transportrichtung (T) starre Gliederkette ausgebildet ist.

11. Bandförderer nach wenigstens einem der vorigen Ansprüche, wobei der zweite Längsabschnitt (L2) nach unten angestellt werden kann und stromabwärts des ersten Längsabschnitts (L1) angeordnet ist, oder wobei der zweite Längsabschnitt (L2) nach oben angestellt werden kann und stromaufwärts des ersten Längsabschnitts (L1) angeordnet ist.

12. Verteilvorrichtung (31 - 38) mit dem Bandförderer (21 - 26) nach wenigstens einem der vorigen Ansprüche und mit einem vorgeschalteten Inspektionsförderer (11), insbesondere umfassend eine Durchlaufwaage und/oder eine Kamera und/oder einen Scanner, zur Inspektion der Lebensmittelprodukte während ihres Transports, und mit einer Steuerung (8) zum automatischen Verstellen der Umlenkrolle (3) und/oder des Umlenkelements (4) in Abhängigkeit von einem Inspektionsergebnis des Inspektionsförderers.

13. Verteilvorrichtung (32, 34 - 38) insbesondere nach Anspruch 12, mit dem Bandförderer (21 - 24) nach wenigstens einem der Ansprüche 1 bis 11, und mit einem diesem bei angestelltem zweiten Längsabschnitt (L2) nachgeschalteten Auffangbehälter (15).

14. Verteilvorrichtung (31, 33) insbesondere nach Anspruch 12, mit dem Bandförderer (21, 22) nach wenigstens einem der Ansprüche 1 bis 11, mit einem diesem bei nicht angestelltem zweiten Längsabschnitt (L2) nachgeschalteten ersten Abführband (13), und mit einem bei angestelltem zweiten Längsabschnitt nachgeschalteten zweiten Abführband / Verteilband (14).

## Claims

1. Belt conveyor (21 - 24) for portioned food products, in particular meat products and/or pasta, comprising:
- a conveyor belt (1) with a drive roller (2), with a deflection roller (3) which can be adjusted upwardly and/or downwardly relative to and with respect to a direction of transport (T) assumed to be horizontal, and with an upper run (1a) extending therebetween for transporting said food products; and
- a deflection element (4) which is arranged between said drive roller and said deflection roller in a vertically fixed position and can be adjusted in the direction of transport (T) and at which said upper run and/or the associated lower run (1b) of said conveyor belt transitions from a first longitudinal section (L1) extending in said direction of transport to a second longitudinal section (L2) angled relative thereto upwardly/downwardly when said deflection roller has been adjusted upwardly/downwardly.

2. Belt conveyor according to claim 1, where said deflection element (4) comprises a first intermediate roller (4a) for deflecting said upper run (1a) and/or a second intermediate roller (4b) for deflecting said lower run (1b).

3. Belt conveyor according to claim 2, where said first and said second intermediate roller (4a, 4b) are arranged such that they can be adjusted individually or together in said direction of transport (T).

4. Belt conveyor according to claim 1, 2 or 3, furthermore with an actuating drive for the adjustment of said deflection element (4) by machine in said direction of transport (T).

5. Belt conveyor according to at least one of the preceding claims, furthermore with a position-controlled actuating drive for said deflection roller (3) for moving to a programmable setting angle (10) of said second longitudinal section (L2).

6. Belt conveyor according to at least one of the preceding claims, furthermore with a mechanical stop (9), which is in particular adjustable, for limiting a setting angle (10) of said second longitudinal section.

7. Belt conveyor according to at least one of the preceding claims, with a pivoting mechanism for adjusting said deflection roller (3).

8. Belt conveyor according to at least one of the preceding claims, furthermore with a programmable control device (8) for selectively operating said drive roller (2) at at least two different transport speeds.

9. Belt conveyor according to at least one of the preceding claims, where said conveyor belt (1) is configured to be elastic, in particular as an elastomer strap, such that its length adapts to a change in length of its upper run (1a) or lower run (1b) caused when said second longitudinal section (L2) is adjusted.

10. Belt conveyor according to at least one of the preceding claims, where said conveyor belt (1) is configured as a link chain that is rigid transverse to said direction of transport (T).

11. Belt conveyor according to at least one of the preceding claims, where said second longitudinal section (L2) can be angled downwardly and is arranged downstream of said first longitudinal section (L1), or where said second longitudinal section (L2) can be angled upwardly and is arranged upstream of said first longitudinal section (L1).

12. Distribution device (31 - 38) with said belt conveyor (21 - 26) according to at least one of the preceding claims and with an upstream inspection conveyor (11), in particular comprising a continuous scale and/or a camera and/or a scanner, for inspecting said food products during their transportation, and with a control device (8) for adjusting said deflection roller (3) and/or said deflection element (4) in an automated manner and in dependence of an inspection result of said inspection conveyor.

13. Distribution device (32, 34 - 38) in particular according to claim 12, with said belt conveyor (21 - 24) according to at least one of the claims 1 to 11, and with a collection container (15) positioned downstream thereof when said second longitudinal section (L2) is angled.

14. Distribution device (31, 33), in particular according to claim 12, with said belt conveyor (21, 22) according to at least one of the claims 1 to 11, with a first discharge belt (13) positioned downstream thereof when said second longitudinal section (L2) is not angled, and with a second discharge belt/distribution belt (14) positioned downstream when said second longitudinal section is angled.

## Revendications

1. Convoyeur à bande (21 - 24) pour des produits alimentaires en portions, en particulier pour des produits carnés et/ou des pâtes alimentaires, comprenant :
- une bande de transport (1) comprenant un rouleau d'entraînement (2), un rouleau de renvoi (3) réglable vers le haut et/ou vers le bas par rapport au rouleau d'entraînement et à une direction de transport (T) supposée être horizontale, et un brin supérieur (1a) s'étendant entre lesdits rouleaux et permettant le transport des produits alimentaires ; et
- un élément de renvoi (4) agencé entre le rouleau d'entraînement et le rouleau de renvoi dans une position définie verticalement et réglable dans la direction de transport (T), et au niveau duquel le brin supérieur et/ou le brin inférieur (1b) associé de la bande de transport passe d'une première section longitudinale (L1), s'étendant dans la direction de transport, à une seconde section longitudinale orientée obliquement vers le haut/vers le bas par rapport au rouleau de renvoi lorsque ledit rouleau de renvoi est ajusté vers le haut/vers le bas.

2. Convoyeur à bande selon la revendication 1, dans lequel l'élément de renvoi (4) comprend un premier rouleau intermédiaire (4a) permettant de dévier le brin supérieur (1a) et/ou un second rouleau intermédiaire (4b) permettant de dévier le brin inférieur (1b).

3. Convoyeur à bande selon la revendication 2, dans lequel les premier et second rouleaux intermédiaires (4a, 4b) sont agencés de telle manière qu'ils peuvent être ajustés individuellement ou ensemble dans la direction de transport (T).

4. Convoyeur à bande selon la revendication 1, 2 ou 3, comprenant en outre un actionneur permettant d'ajuster mécaniquement l'élément de renvoi (4) dans la direction de transport (T).

5. Convoyeur à bande selon au moins l'une quelconque des revendications précédentes, comprenant en outre un actionneur à position contrôlée destiné à la poulie de renvoi (3) et permettant d'induire un angle d'attaque programmable (10) de la seconde section longitudinale (L2).

6. Convoyeur à bande selon au moins l'une quelconque des revendications précédentes, comprenant en outre une butée mécanique (9) en particulier ajustable et permettant de limiter un angle d'attaque (10) de la seconde section longitudinale.

7. Convoyeur à bande selon au moins l'une quelconque des revendications précédentes, comprenant un mécanisme de pivotement permettant d'ajuster le rouleau de renvoi (3).

8. Convoyeur à bande selon au moins l'une quelconque des revendications précédentes, comprenant en outre une commande programmable (8) permettant de faire fonctionner au choix le rouleau d'entraînement (2) avec au moins deux vitesses de transport différentes.

9. Convoyeur à bande selon au moins l'une quelconque des revendications précédentes, dans lequel la bande de transport (1) est réalisée de manière élastique, en particulier sous forme de courroie en élastomère, de telle manière que sa longueur s'adapte à une modification de longueur de son brin supérieur (1a) ou de son brin inférieur (1b) causée par le réglage de la seconde section longitudinale (L2).

10. Convoyeur à bande selon au moins l'une quelconque des revendications précédentes, dans lequel la bande de transport (1) est réalisée sous la forme d'une chaîne à maillons rigide transversalement à la direction de transport (T).

11. Convoyeur à bande selon au moins l'une quelconque des revendications précédentes, dans lequel la seconde section longitudinale (L2) peut être orientée vers le bas et est agencée en aval de la première section longitudinale (L1), ou dans lequel la seconde section longitudinale (L2) peut être orientée vers le haut et est agencée en amont de la première section longitudinale (L1).

12. Dispositif de distribution (31 - 38) comprenant le convoyeur à bande (21 - 26) selon au moins l'une quelconque des revendications précédentes et comprenant un convoyeur d'inspection (11) placé en amont comprenant en particulier une balance de passage et/ou une caméra et/ou un scanner afin d'inspecter les produits alimentaires pendant leur transport, et comprenant une commande (8) permettant d'ajuster automatiquement le rouleau de renvoi (3) et/ou de l'élément de renvoi (4) en fonction d'un résultat d'inspection du convoyeur d'inspection.

13. Dispositif de distribution (32, 34 - 38) en particulier selon la revendication 12, comprenant le convoyeur à bande (21 - 24) selon au moins l'une quelconque des revendications 1 à 11, et comprenant un récipient collecteur (15) placé en aval dudit convoyeur à bande lorsque la seconde section longitudinale (L2) est orientée.

14. Dispositif de distribution (31, 33) en particulier selon la revendication 12, comprenant le convoyeur à bande (21, 22) selon au moins l'une quelconque des revendications 1 à 11, comprenant une première bande d'évacuation (13) placée en aval dudit convoyeur à bande lorsque la seconde section longitudinale (L2) n'est pas orientée, et comprenant une seconde bande d'évacuation/bande de distribution (14) placée en aval lorsque la seconde section longitudinale est orientée.
